# EUROPEAN PATENT APPLICATION

(11) **EP 4 769 696 A1**
(43) Date of publication of application: **01.07.2026**
(21) Application number: 25845419.8
(22) Date of filing: 23.07.2025
(51) Int. Cl.: H01M 50/178, H01M 50/502, H01M 10/04, H01M 50/519, H01M 50/271

(54) **BATTERY CELL, BATTERY MODULE INCLUDING SAME, BATTERY PACK, AND VEHICLE**

(30) Priority: 24.07.2024 KR 20240097762
(71) Applicant: LG Energy Solution, Ltd., Seoul 07335 (KR)
(72) Inventor: LEE, Hyunjae, Daejeon 34122 (KR)
(74) Representative: BCKIP Part mbB
(86) International application number: PCT/KR2025/010860
(87) International publication number: WO 2026/024074

(57) **Abstract**

A battery module according to an embodiment of the present disclosure includes a cell assembly formed by stacking battery cells and having a pair of electrode leads arranged to face upward, a lower frame having a form in which one side and an opposite side are open in the longitudinal direction and accommodating the cell assembly, a busbar frame assembly coupled to the lower frame and including a busbar frame mounted on the cell assembly, and a plurality of busbar plates fixed onto the busbar frame and electrically connected to the electrode leads of the battery cell.

## Description

### [Technical Field]

The present disclosure relates to a battery cell, a battery module including the same, a battery pack, and a vehicle.

### [Background Art]

Unlike primary batteries which cannot be rechargeable, secondary batteries are rechargeable and are used not only in portable devices but also in electric vehicles (EVs) and hybrid electric vehicles (HEVs) powered by electrical power sources.

Currently, widely used secondary batteries include lithium-ion batteries, lithium polymer batteries, nickel-cadmium batteries, nickel-hydride batteries, and nickel-zinc batteries. The operating voltage of such a unit secondary battery cell, that is, a unit battery cell, is approximately 2.5 V to 4.6 V. Therefore, if a higher output voltage is required, multiple battery cells are connected in series to form a battery pack. Furthermore, depending on the required charge/discharge capacity of a battery pack, multiple battery cells may be connected in parallel to form a battery pack. Therefore, the number of battery cells included in a battery pack can vary depending on the required output voltage or charge/discharge capacity.

When multiple battery cells are connected in series or parallel to form a battery pack, it is common to first construct a battery module composed of at least one battery cell, preferably multiple battery cells and then construct a battery pack using at least one battery module and additional components. Here, a battery module refers to a component in which multiple battery cells are connected in series or parallel, and a battery pack refers to a component in which multiple battery modules are connected in series or parallel to increase capacity and output power.

Incidentally, with the growth of the electric vehicle industry, customer demand for battery performance and efficiency is increasing. There is a need to maximize space utilization within a pack or module while maintaining or improving the conventional performance. Furthermore, improvements in the components within a pack or module are needed to improve space utilization.

### [Disclosure]

### [Technical Problem]

An object of the present disclosure is to maintain or improve conventional performance while maximizing space utilization within a battery pack or a battery module.

Furthermore, an object of the present disclosure is to improve the components within a battery pack or a battery module to improve space utilization.

Technical objects to be achieved by the present disclosure are not limited to the objects described above, and other objects not mentioned can be clearly understood by those skilled in the art from the description of the disclosure described below.

### [Technical Solution]

A battery cell according to an embodiment of the present disclosure to achieve the objects includes an electrode assembly, a receiving part for accommodating the electrode assembly, a sealing portion formed around the receiving part, and a pair of electrode leads connected to the electrode assembly and extending outward from the sealing portion, wherein the sealing portion is formed by bonding opposite ends of the receiving part and a long side portion connecting the opposite ends, and the pair of electrode leads extend outward through at least a portion of the long side portion.

In one aspect of the present disclosure, the pair of electrode leads may extend outward from the long side portion at a predetermined distance from each other.

A battery module according to the present disclosure includes a cell assembly formed by stacking at least one battery cell according to the aforementioned embodiment and including the pair of electrode leads arranged to face upward, a lower frame for accommodating the cell assembly, a busbar frame assembly coupled to the lower frame and including a busbar frame mounted on the cell assembly, and a plurality of busbar plates fixed onto the busbar frame and electrically connected to the electrode leads of the battery cell, and end plates coupled to the one side and the opposite side of the lower frame in the longitudinal direction to cover both ends of the cell assembly in the longitudinal direction.

In one aspect of the present disclosure, the lower frame may include a base plate extending horizontally, and a side plate extending upward from the base plate.

Here, the busbar frame may include at least one coupling portion, at least one insertion groove may be provided on an upper edge of the side plate, and the coupling portion may be mounted on the insertion groove.

In another aspect of the present disclosure, the busbar frame may include a main body covering a longitudinal central region of the battery module, at least one extension portion extending from the main body toward a longitudinal end of the battery module, and an end portion provided at an end of the extension portion.

For example, a PCB may be mounted on the main body, and a plurality of busbar plates and terminal busbars may be electrically connected to the PCB.

In another aspect of the present disclosure, the terminal busbar may include a terminal extension portion extending from the main body of the busbar frame along the extension portion, and a terminal portion provided at an end of the terminal extension portion and exposed to the outside.

In one aspect of the present disclosure, the end portion may be configured to be coupled to the end plates.

In another aspect to the present disclosure, the end portion may include a coupling protrusion, each end plate may include a groove, and the coupling protrusion of the end portion may be configured to be inserted into the groove provided in each end plate.

In another aspect to the present disclosure, the terminal portion may include a positive terminal portion and a negative terminal portion, and the positive terminal portion and the negative terminal portion may be mounted on the same end plate.

In one aspect of the present disclosure, the battery module may include an upper cover provided on the busbar frame assembly.

Further, the present disclosure provides a battery pack including at least one battery module according to the aforementioned embodiment.

In addition, the present disclosure provides a vehicle including at least one battery pack according to the aforementioned embodiment.

### [Effects of the Invention]

According to the present disclosure, it is possible to optimize the space within a battery module by filling the space of the battery module with electrodes.

That is, the present disclosure can maximize the space utilization within the battery module.

Therefore, energy density can be maximized.

Furthermore, according to the present disclosure, it is possible to prevent warping of the battery module in the width direction and distortion in the length direction by securing a busbar frame assembly to the top of the battery module.

Effects achieved through the present disclosure are not limited to the aforementioned effects, and other effects not mentioned will be clearly understood by those skilled in the art from the description of the disclosure described below.

### [Description of Drawings]

The accompany drawings, which are included to provide a further understanding of the present disclosure and are incorporated on and constitute a part of this specification illustrate embodiments of the present disclosure and together with the description serve to explain the principles of the present disclosure.
FIG. 1 is a diagram illustrating a battery module according to an embodiment of the present disclosure.
FIG. 2 is an exploded perspective view of FIG. 1.
FIG. 3 is a diagram illustrating a battery cell according to an embodiment of the present disclosure.
FIG. 4 is a diagram illustrating a lower frame according to an embodiment of the present disclosure.
FIG. 5 is a diagram illustrating a busbar frame assembly according to an embodiment of the present disclosure.
FIG. 6 is a diagram illustrating electrical connection between the busbar frame assembly and a cell assembly according to an embodiment of the present disclosure.
FIG. 7 is a diagram illustrating a combined structure between the busbar frame assembly and the lower frame according to an embodiment of the present disclosure.
FIG. 8 is a diagram illustrating a state in which the busbar frame assembly and the lower frame according to an embodiment of the present disclosure are combined.
FIG. 9 is a diagram illustrating a combined structure between the busbar frame assembly and an end plate according to an embodiment of the present disclosure.
FIG. 10 is a diagram illustrating a state in which the busbar frame assembly and the end plate according to an embodiment of the present disclosure are combined.
FIG. 11 is a diagram illustrating a battery pack including the battery module of FIG. 1.
FIG. 12 is a diagram illustrating a vehicle including the battery pack of FIG. 11.

### [Mode for Carrying out the Invention]

The advantages and features of the present disclosure, and the methods for achieving the same will become clear with reference to the embodiments described below in conjunction with the accompanying drawings. However, the present disclosure is not limited to the embodiments disclosed below, but may rather be implemented in various different forms, and these embodiments are provided only to make the present disclosure complete and to fully inform those skilled in the art of the scope of the disclosure, and the present disclosure is defined only by the scope of the claims. Accordingly, in some embodiments, well-known process steps, well-known device structures, and well-known techniques are not specifically described in order to avoid ambiguity in the interpretation of the present disclosure. Like reference numerals refer to like elements throughout the specification.

In the drawings, the thickness may be enlarged to clearly express various layers and regions. Like reference numerals are used for similar parts throughout the specification. When a part, such as a layer, a film, a region, or a plate, is said to be "on" another part, this includes not only cases where it is "directly on" the other part, but also cases where there is another part in between. Conversely, when a part is said to be "directly on" another part, it means that there is no other part in between. Further, when a part, such as a layer, a film, a region, or a plate, is said to be "beneath" another part, this includes not only cases where it is "directly beneath" the other part, but also cases where there are other parts in between. Conversely, when a part is said to be "directly beneath" another part, it means that there are no other parts in between.

The statement that two compared objects are identical means "substantially identical." Therefore, "substantially identical" may include variations that are considered low in the art, for example, within 5%. Furthermore, uniformity of a parameter over a given region may mean uniformity from an average perspective.

Throughout the specification, unless otherwise specified, each component may be singular or plural.

Any component being placed "on (or below)" another component may mean not only that the component is placed in contact with the upper surface (or lower surface) of the other component, but also that a component may intervene between the other component and the component placed on (or below) the other component.

Further, when a component is described as being "connected" or "coupled" to another component, it should be understood that the components may be directly connected or coupled to each other, but that another component may also be "interposed" between the components, or that the components may be "connected" or "coupled" through another component.

Throughout the specification, "A and/or B" means A, B, or A and B, unless otherwise stated, and "C to D" means C or more and D or less, unless otherwise stated.

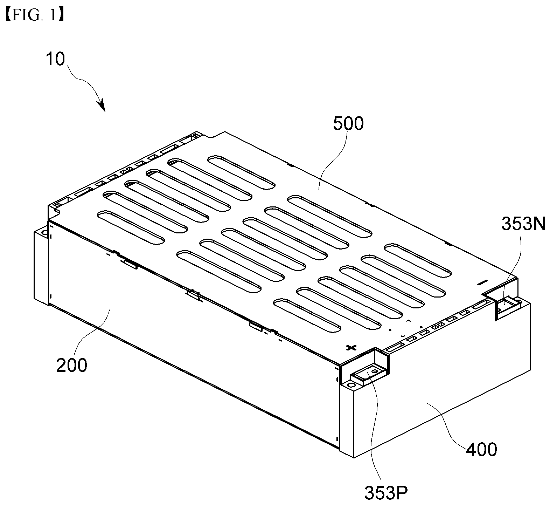

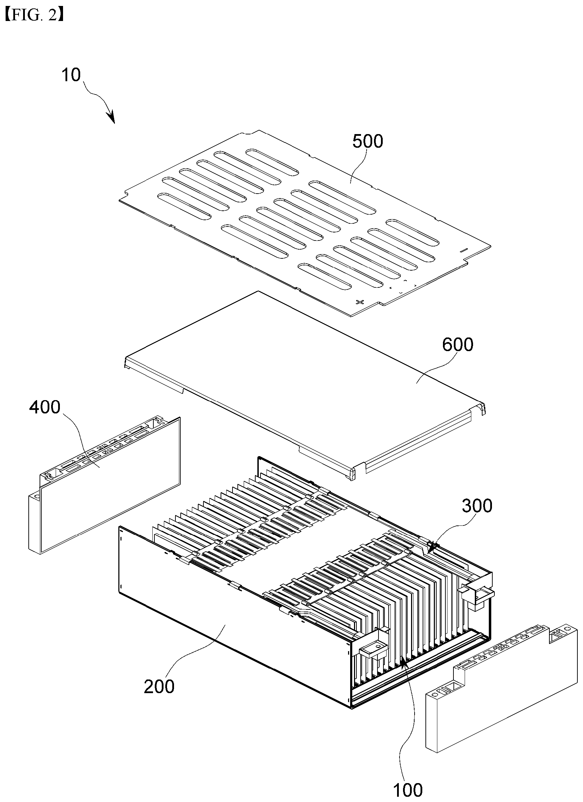

FIG. 1 is a diagram illustrating a battery module 10 according to an embodiment of the present disclosure and FIG. 2 is an exploded perspective view of FIG. 1.

Referring to FIG. 1 and FIG. 2, the battery module 10 according to an embodiment of the present disclosure includes a cell assembly 100, a lower frame 200, a busbar frame assembly 300, and end plates 400. In addition, the battery module 10 may further include an upper cover 500 and an inner cover 600.

The cell assembly 100 may include a plurality of battery cells 110. The cell assembly 100 may be formed by stacking the battery cells 110. In this case, the battery cells 110 may be stacked side by side in a vertically upright position.

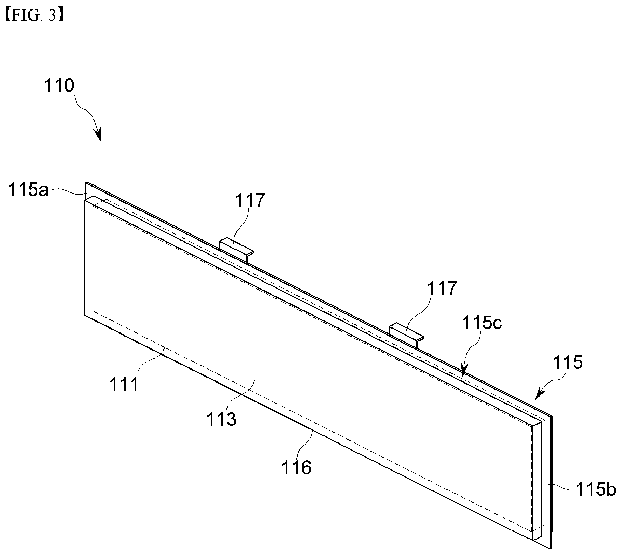

FIG. 3 is a diagram illustrating the battery cell 110 according to an embodiment of the present disclosure.

Referring to FIG. 3, the battery cell 110 may be a secondary battery and may be, for example, a pouch-type battery cell 110. The battery cell 110 may be provided in a vertically upright state. Referring to FIG. 3, the battery cell 110 may include an electrode assembly 111, a receiving part 113 for receiving the electrode assembly 111, a sealing portion 115 formed around the receiving part 113, and a pair of electrode leads 117 connected to the electrode assembly 111 and extending outward from the sealing portion 115.

The battery cell 110 may be provided in a form in which the electrode assembly 111 is accommodated in the receiving part 113 and both ends 115a and 115b of the receiving part 113 and a long side portion 115c connecting the same are bonded. Both ends 115a and 115b may be the ends 115a and 115b of the battery cell 110 in the longitudinal direction. In other words, the battery cell 110 according to the present embodiment has a total of three sealing portions 115, and the sealing portions 115 may be sealed by a method such as heat fusion. The other side of the long side portion 115c may be a connecting portion 116. The receiving part 113 may be formed of a laminate sheet including a resin layer and a metal layer.

The pair of electrode leads 117 are coupled to electrode tabs (not shown) provided on the electrode assembly 111 and may extend outwardly from the sealing portion 115 through the sealing portion 115. Preferably, the pair of electrode leads 117 may extend outward through at least portions of the long side portion 115c. That is, the pair of electrode leads 117 may have a shape extending in the height direction of the battery cell 110. In this case, the height direction may refer to the vertical direction.

In one aspect of the present disclosure, the long side portion 115c may be provided to face the upper direction of the battery cell 110. Specifically, referring to FIG. 3, among the three sides of the sealing portion 115, the long side portion 115c may be provided facing upward in the battery cell 110. That is, the pair of electrode leads 117 may be arranged to face upward. Preferably, the pair of electrode leads 117 may extend from the long side portion 115c at a predetermined distance from each other. That is, the battery cell 110 may be arranged such that the long side portion 115c faces the upper direction of the battery cell 110.

According to this structure, since the electrode leads 117 of the battery cell 110 extend upward, the busbar frame assembly 300 electrically connected to the electrode leads 117 can be mounted on the upper side of the battery module 10. Accordingly, by positioning the busbar frame assembly 300 on the upper side of the battery cell 110, the space in the front-rear direction of the battery module 10 occupied by the conventional busbar frame assembly 300 can be filled with electrodes, thereby optimizing the space within the module. In other words, according to the above configuration, the space utilization within the module can be maximized. Accordingly, the energy density of the battery module 10 can be maximized.

Furthermore, the conventional busbar frame assembly 300 depends on thermal resin due to fixation of the battery module 10 in the longitudinal direction, making precise positioning difficult. However, in the configuration of the present disclosure described above, warping of the battery module 10 in the width direction and distortion in the length direction by fixing the busbar frame assembly 300 to the upper end of the battery module 10. Consequently, the position of a terminal busbar 350 can also be secured.

The battery cell 110 may include a venting portion. In the pouch-type battery cells 110, venting typically occurs at the sealing portions 115 of the battery cell 110 when abnormal heat generation and subsequent internal pressure increase occur. That is, in the battery cell 110, when the internal pressure increases, the long side portion 115c, which is the sealing portion 115 formed in the longitudinal direction of the battery cell 110, is often broken first, rather than both ends 115a and 115b, which are the sealing portions 115 formed in the direction in which the electrode leads 117 extend. Therefore, the venting portion may be provided on the long side portion 115c of the battery cell 110. Since the venting portion is provided on the long side portion 115c of the sealing portion 115, the venting portion may be provided in the upper region of the battery cell 110.

According to this configuration of the present disclosure, when venting gas or flames are generated in the battery cell 110 due to an event such as thermal runaway, such gas or flames can be smoothly discharged upward from the battery cell 110. At this time, the gas or flames can be discharged to the outside of the battery module 10 through a venting hole 510 of the upper cover 500, which will be described later. Therefore, explosion and the like of the battery module 10 including the battery cell 110 can be prevented.

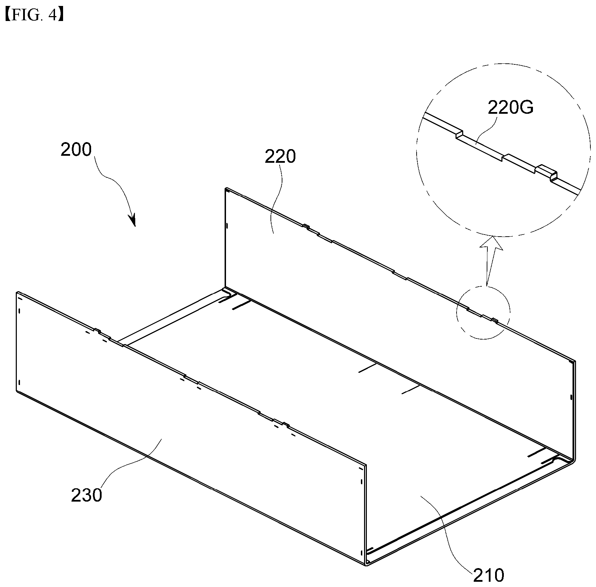

FIG. 4 is a diagram illustrating the lower frame 200 according to an embodiment of the present disclosure.

Referring to FIG. 4, the lower frame 200 may be configured to accommodate the cell assembly 100. The lower frame 200 may have a shape in which one side and the other side in the longitudinal direction are open.

The lower frame 200 may include a base plate 210 extending horizontally and side plates 220 extending upward from the base plate 210. The base plate 210 may have a plate shape extending approximately horizontally. The side plates 220 may have a plate shape extending approximately vertically. The base plate 210 and the side plates 220 may be configured to be perpendicular to each other. That is, the lower frame 200 may be a U-shaped frame.

The side plates 220 may be provided in the width direction of the battery module 10. That is, the lower frame 200 may have the side plates 220 provided in the width direction and one side and the other side thereof in the longitudinal direction are open.

In another aspect of the present disclosure, the base plate 210 and the side plates 220 may be an integral part. Alternatively, the base plate 210 and the side plates 220 may be detachable.

In another aspect of the present disclosure, at least one insertion groove 220G may be provided on the upper edge of the side plate 220.

Referring to FIG. 4, the upper edge of the side plate 220 may have a plurality of insertion grooves 220G. The insertion grooves 220G may be structurally connected to coupling portions 311H of a bus bar frame 310 which will be described later. For example, the coupling portions 311H of the bus bar frame 310 may be configured to be mounted on the insertion grooves 220G.

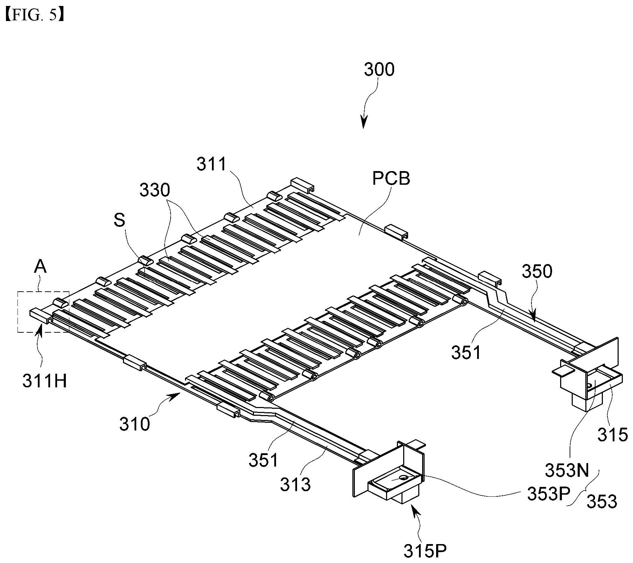

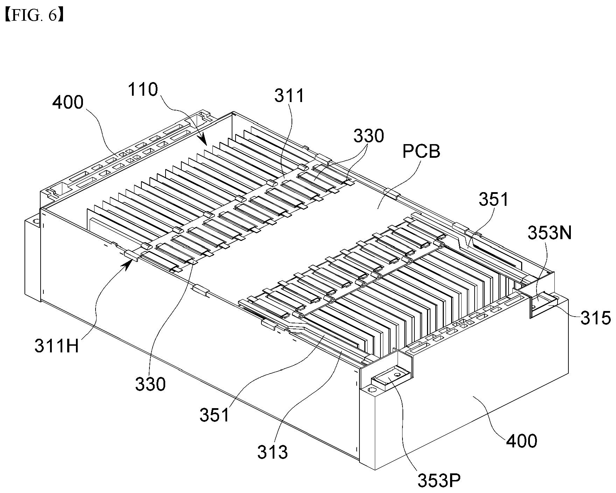

FIG. 5 is a diagram illustrating the busbar frame assembly 300 according to an embodiment of the present disclosure, and FIG. 6 is a diagram illustrating an electrical connection structure between the busbar frame assembly 300 and the cell assembly 100 according to an embodiment of the present disclosure.

Referring to FIG. 5 and FIG. 6, the busbar frame assembly 300 may include the busbar frame 310, a busbar plate 330, and a terminal busbar 350. The busbar frame assembly 300 may be mounted on the cell assembly 100.

In the configuration described above, since the busbar frame assembly 300 is mounted on the upper side of the battery module 10, the space in the battery module 10 occupied by the conventional busbar frame assembly 300 can be filled with electrodes, thereby optimizing the space within the battery module 10. That is, according to the structure of the present disclosure, space utilization within the battery module 10 can be maximized. Accordingly, the energy density of the battery module 10 can be maximized.

In one aspect of the present disclosure, the busbar frame 310 may serve as a base on which a plurality of busbar plates 330 can be mounted. The busbar frame 310 may include predetermined electrode lead slits on which the plurality of busbar plates 330 can be mounted. The busbar frame 310 may be coupled to the lower frame 200. The busbar frame 310 may be mounted on the upper side of the cell assembly 100. The busbar frame 310 may be made of an insulating material, such as resin.

In another aspect of the present disclosure, the busbar frame 310 may include a main body 311, an extension portion 313, and an end portion 315.

The main body 311 may be configured to cover a central region of the battery module 10 in the longitudinal direction. The main body 311 may have an approximately plate shape extending horizontally.

The main body 311 may include a busbar mounting portion formed at a position corresponding to the electrode leads 117 of the battery cell 110. The busbar mounting portion may include a plurality of electrode lead slits formed at positions corresponding to the electrode leads 117. The electrode leads 117 are extended to the outside of the busbar frame assembly 300 through the electrode lead slits, and the extended electrode leads 117 may be bent and fixed to the busbar plate 330 by welding or the like. A PCB may be mounted on the main body 311. The PCB may be configured to electrically connect a plurality of busbar plates 330 and terminal busbars 350.

In another aspect of the present disclosure, the busbar frame 310 may include at least one coupling portion 311H. For example, the main body 311 may include at least one coupling portion 311H.

The above-described coupling portion 311H may serve as a component for coupling with the lower frame 200. For example, the busbar frame 310 is mounted on the upper side of the cell assembly 100. In this case, it is preferable to fix the position of the busbar frame 310 to the lower frame 200 that accommodates the cell assembly 100.

The coupling portion 311H may be provided at both ends 115a and 115b of the busbar frame 310 in the width direction. Specifically, the coupling portion 311H may be provided at both widthwise ends 115a and 115b of the main body 311. In this case, the coupling portion 311H may be configured to have a hook shape, as can be seen in FIG. 5, but the shape of the coupling portion 311H is not limited thereto. Any structure that can be structurally connected to the lower frame 200 is considered to be within the scope of the present disclosure.

Referring to FIG. 5 and FIG. 6, the extension portion 313 may extend from the main body 311 toward the longitudinal end of the battery module 10. For example, the extension portion 313 may have an approximately rod shape. More specifically, the extension portion 313 may have a narrow plate shape that extends longitudinally. The extension portion 313 may serve as a mounting base for a terminal extension portion 351 which will be described later.

A plurality of extension portions 313 may be provided. For example, referring to FIG. 6, the extension portions 313 may be provided at both ends 115a and 115b of the battery module 10 in the longitudinal direction. That is, the extension portions 313 may include an extension portion 313 for a positive terminal portion 353P and an extension portion 313 for a negative terminal portion 353N.

Referring to FIG. 5 and FIG. 6, the end portion 315 may be provided at the end of the extension portion 313.

A plurality of end portions 315 may be provided. For example, referring to FIG. 6, the end portions 315 may be provided at both widthwise ends 115a and 115b of the battery module 10. The end portions 315 may serve as mounting bases for the terminal portions 353. The end portions 315 may include an end portion 315 for the positive terminal portion 353P and an end portion 315 for the negative terminal portion 353N.

In one aspect of the present disclosure, the end portions 315 may be coupled to the end plates 400. For example, the end portions 315 may include a coupling protrusion 315P. The coupling protrusion 315P may be configured to be inserted into a groove 410 of each end plate 400, which will be described later. The coupling structure for coupling with the end plates 400 will be described in detail below.

Referring to FIG. 5 and FIG. 6, the busbar plate 330 may be fixed to the busbar frame 310. The busbar plate 330 may be electrically connected to the electrode leads 117 of the battery cell 110. The busbar plate 330 may include an electrically conductive material. For example, the busbar plate 330 may include a metal material. The busbar plate 330 may have an approximately stick shape.

Referring to FIG. 5 and FIG. 6, the terminal busbar 350 may be electrically connected to the busbar plate 330. The terminal busbar 350 includes an electrically conductive material. For example, the terminal busbar 350 may include a metal material. The terminal busbar 350 may be configured to be exposed to the outside of the battery module 10. That is, the terminal busbar 350 may serve as a terminal of the battery module 10. The terminal busbar 350 may be electrically connected to another battery module 10 through an inter-busbar. The terminal busbar 350 may be connected to the electrode leads 117 of the battery cell 110 like the busbar plate 330. The terminal busbar 350 may be disposed at both edges of the busbar frame 310 in the width direction (the stacking direction of the battery cells 110).

Each terminal busbar 350 may include the terminal extension portion 351 and the terminal portion 353.

The terminal extension portion 351 may extend from the main body 311 of the busbar frame 310 along the extension portion 313. The terminal portion 353 may be provided at the end of the terminal extension portion 351. The terminal portion 353 may be configured to be exposed to the outside of the battery module 10. In this case, the terminal portion 353 may be mounted on the end portion 315. The terminal extension portion 351 may extend in the longitudinal direction. Specifically, the terminal extension portions 351 may extend in the same direction based on the center of the battery module 10. That is, the terminal extension portions 351 may extend in the same direction from the main body 311. The terminal extension portion 351 may be electrically connected to another battery module 10 through the terminal portion 353.

The terminal portion 353 may include the positive terminal portion 353P and the negative terminal portion 353N. The positive terminal portion 353P and the negative terminal portion 353N may be mounted on the same end plate 400. For example, referring to FIG. 6, the negative terminal portion 353N and the positive terminal portion 353P are simultaneously mounted on the end plate 400 shown on the right side of the drawing. On the other hand, the positive terminal portion 353P and the negative terminal portion 353N may be mounted on different end plates 400. In this case, the terminal extension portions 351 may extend in opposite directions from the center.

Referring back to FIG. 1, FIG. 2, and FIG. 6, the end plates 400 may be coupled to one side and opposite side of the lower frame 200 in the longitudinal direction. The end plates 400 may be configured to cover both longitudinal ends 115a and 115b of the cell assembly 100. The end plates 400 may include a metal material to ensure rigidity.

In one aspect of the present disclosure, the end plates 400 may include the groove 410. The groove 410 may be configured such that a portion of the end plate 400 is recessed inward. The groove 410 may be configured to accommodate the coupling protrusion 315P provided at the end portion 315 of the busbar frame 310. That is, the coupling protrusion 315P of the end portion 315 may be configured to be inserted into the groove 410 of the end plate 400.

According to this configuration, the terminal portion 353 can be stably fixed to a specific position of the end plate 400.

The end portion 315 may be made of an insulating material, such as resin. Therefore, the end portion 315 interposed between the terminal portion 353 and the end plates 400 can maintain electrical insulation between the end plates 400 and the terminal portion 353.

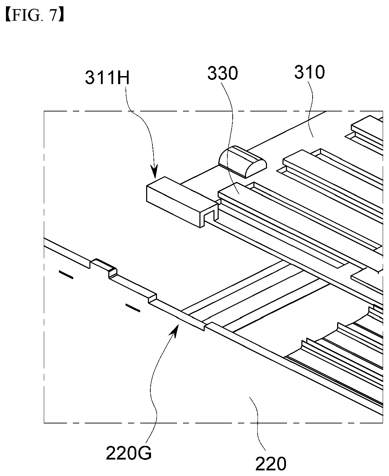

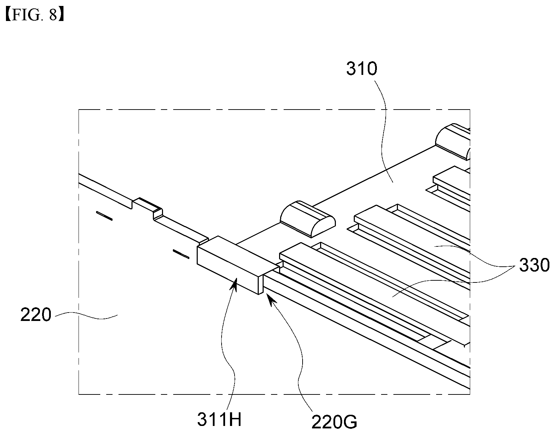

FIG. 7 is a diagram illustrating the combined structure of the busbar frame assembly 300 and the lower frame 200 according to an embodiment of the present disclosure, and FIG. 8 is a diagram illustrating a state in which the busbar frame assembly 300 and the lower frame 200 according to an embodiment of the present disclosure are combined.

Referring to FIG. 7 and FIG. 8, the busbar frame 310 may include at least one coupling portion 311H, and the side plate 220 may include with at least one insertion groove 220G on the upper edge thereof, and the coupling portion 311H may be configured to be mounted on the insertion groove 220G.

The insertion groove 220G may have a groove shape in which the upper edge of the side plate 220 is recessed downward. The coupling portion 311H may have a width equal to that of the insertion groove 220G and may be configured to surround the insertion groove 220G, thereby enabling stable connection. With this structure, the coupling portion 311H is mounted on and fixed to the insertion groove 220G, thereby preventing longitudinal movement of the busbar frame 310. That is, the busbar frame 310 can be firmly fixed onto the lower frame 200. That is, according to the above configuration, by fixing the busbar frame assembly 300 to the upper end of the battery module 10, it is possible to prevent warping of the battery module 10 in the width direction and distortion in the length direction. Accordingly, the position of the terminal busbar 350 can also be secured.

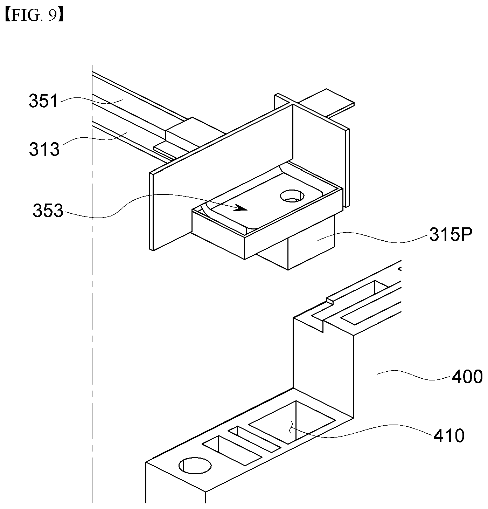

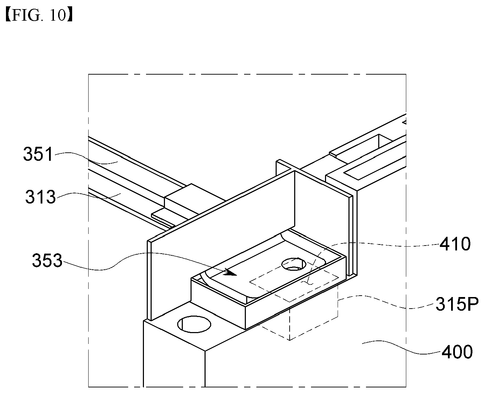

FIG. 9 is a diagram illustrating the combined structure of the busbar frame assembly 300 and the end plate 400 according to an embodiment of the present disclosure and FIG. 10 is a diagram illustrating a state in which the busbar frame assembly 300 and the end plate 400 according to an embodiment of the present disclosure are combined.

Referring to FIG. 9 and FIG. 10, the end portion 315 includes the coupling protrusion 315P, the end plate 400 includes the groove 410, and the coupling protrusion 315P of the end portion 315 may be configured to be inserted into the groove 410 of the end plate 400. The coupling protrusion 315P may be press-fitted into the groove 410. That is, the coupling protrusion 315P may be inserted into and fixed to the groove 410 in a press-fit manner.

The end plate 400 may include at least one hollow cavity space for weight reduction and shock absorption. The groove 410 may correspond to at least one cavity space.

According to the above structure, the terminal portion 353 can be easily fixed to a specific location on the end plate 400. Furthermore, according to the above structure, by fixing the busbar frame 310 to the end plate 400, unnecessary movement of the busbar frame 310 can be prevented. That is, with the above configuration, by fixing the busbar frame assembly 300 to the upper end of the battery module 10, warping in the width direction and distortion in the length direction of the battery module 10 can be prevented. Accordingly, the position of the terminal busbar 350 can also be secured.

Referring back to FIG. 1 and FIG. 2, the battery module 10 may include the upper cover 500 provided on the busbar frame assembly 300.

The upper cover 500 may include at least one venting hole 510. The venting hole 510 may be positioned adjacent to the venting portion of the battery cell 110.

In this configuration of the present disclosure, if venting gas or flames are generated in the battery cell 110 due to an event such as thermal runaway, such gas or flames can be smoothly discharged upward from the battery cell 110. At this time, the gas or flames can be discharged to the outside of the battery module 10 through the venting hole 510 of the upper cover 500, which will be described later. Therefore, explosion of the battery module 10 including the battery cell 110 can be prevented.

In another aspect of the present disclosure, the battery module 10 may further include the inner cover 600.

The inner cover 600 may be provided between the upper cover 500 and the busbar frame assembly 300. The inner cover 600 may have a plate-like shape extending horizontally. The inner cover 600 may include a flange bent downward at a corner region.

The inner cover 600 may include a ductile material. That is, the inner cover 600 may be configured such that at least a portion thereof is ruptured by flame or gas.

According to the above configuration, the inner cover 600 isolates the battery cell 110 from the outside of the battery module 10, and when a thermal event occurs, a part of the inner cover 600 is ruptured, and thus flames or gases generated within the battery module 10 can be easily discharged to the outside through the venting hole 510 of the upper cover 500.

According to the structure of the present disclosure, since the busbar frame assembly 300 is mounted on the upper side of the battery module 10, the space within the battery module 10 occupied by the conventional busbar frame assembly 300 can be filled with electrodes, thereby optimizing the space within the battery module 10. In other words, the structure of the present disclosure maximizes the space utilization within the battery module 10. Consequently, the energy density of the battery module 10 can be maximized. Furthermore, according to the structure of the present disclosure, by fixing the busbar frame assembly 300 to the upper side of the battery module 10, the widthwise distortion and lengthwise warping of the battery module 10 can be prevented. Therefore, the position of the terminal busbar 350 can also be secured.

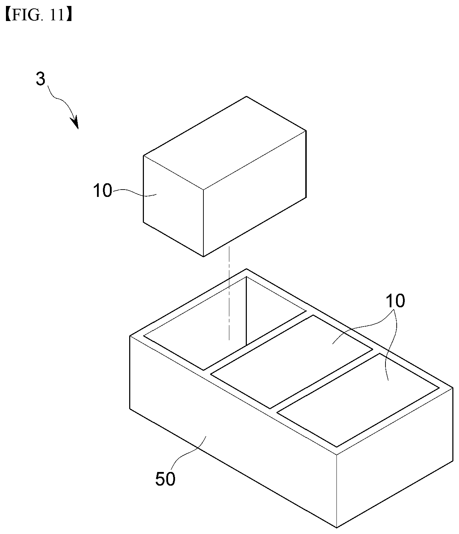

FIG. 11 is a diagram illustrating a battery pack including the battery module 10 according to an embodiment of the present disclosure.

Referring to FIG. 11, the battery pack 3 according to an embodiment of the present disclosure includes a battery assembly in which multiple battery modules 10 according to an embodiment of the present disclosure as described above are electrically connected, and a pack case 50 accommodating the battery modules. In the drawing of the present disclosure, components such as a bus bar, a cooling unit, and a power terminal for electrical connection are omitted for convenience of illustration. In addition, the battery pack 3 may further include various components, such as components of the battery pack 3 known at the time of filing of the present disclosure, such as a BMS, a relay, and a current sensor.

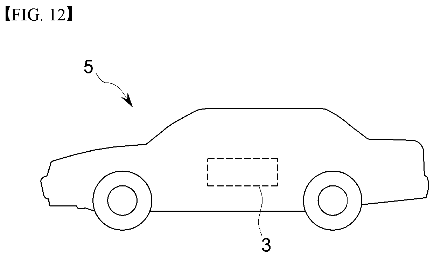

FIG. 12 is a diagram illustrating a vehicle including the battery pack 3 of FIG. 11.

Referring to FIG. 12, a vehicle 5 according to an embodiment of the present disclosure may be, for example, an electric vehicle, a hybrid vehicle, or a plug-in hybrid vehicle, and includes the battery pack 3 according to an embodiment of the present disclosure. The vehicle 5 includes a four-wheeled vehicle and a two-wheeled vehicle. The vehicle 5 operates by receiving power from the battery pack 3 according to an embodiment of the present disclosure. Furthermore, the vehicle 5 according to the present disclosure may further include various other components included in the vehicle, in addition to the battery cell 110 or the battery pack 3. For example, the vehicle 5 according to the present disclosure may further include a body, a motor, a control device such as an electronic control unit (ECU), and the like, in addition to the battery cell 110 according to the present disclosure.

While terms indicating directions such as "up" and "down" are used throughout this specification, it is clear to those skilled in the art that these terms are merely for convenience of explanation and may vary depending on the location of an object being described or the position of an observer.

Although the present disclosure has been described above with reference to limited embodiments and drawings, the present disclosure is not limited thereto. Those skilled in the art will readily appreciate that various modifications and variations are possible within the scope of the technical spirit of the present disclosure and the equivalent scope of the claims set forth below.

### [Industrial Applicability]

The present disclosure provides a battery module that optimizes the internal space by filling the front-rear space of the battery module with electrodes.

## Claims

1. A battery cell comprising:
an electrode assembly;
a receiving part for accommodating the electrode assembly;
a sealing portion formed around the receiving part; and
a pair of electrode leads connected to the electrode assembly and extending outward from the sealing portion,
wherein the sealing portion is formed by bonding opposite ends of the receiving part and a long side portion connecting the opposite ends, and the pair of electrode leads extend outward through at least a portion of the long side portion.

2. The battery cell of claim 1, wherein the pair of electrode leads extend outward from the long side portion at a predetermined distance from each other.

3. A battery module comprising:
a cell assembly formed by stacking a plurality of battery cells each comprising an electrode assembly, a receiving part for accommodating the electrode assembly, a sealing portion formed around the receiving part and formed by bonding opposite ends of the receiving part and a long side portion connecting the opposite ends, and a pair of electrode leads connected to the electrode assembly and extending outward from the sealing portion through the long side portion, wherein the electrode leads are arranged to face upward;
a lower frame for accommodating the cell assembly; and
a busbar frame assembly coupled to the lower frame and comprising a busbar frame mounted on the cell assembly, and a plurality of busbar plates fixed to the busbar frame and electrically connected to the electrode leads of the battery cell.

4. The battery module of claim 3, wherein one side and an opposite side of the lower frame in the longitudinal direction are open.

5. The battery module of claim 4, further comprising end plates coupled to the one side and the opposite side of the lower frame in the longitudinal direction to cover both ends of the cell assembly.

6. The battery module of claim 3, wherein the lower frame comprises:
a base plate extending horizontally; and
a side plate extending upward from the base plate.

7. The battery module of claim 6, wherein the busbar frame includes at least one coupling portion, at least one insertion groove is provided on an upper edge of the side plate, and the coupling portion is configured to be mounted on the insertion groove.

8. The battery module of claim 3, wherein the busbar frame assembly further comprises a terminal busbar electrically connected to the electrode leads of the battery cell and exposed to the outside.

9. The battery module of claim 8, wherein the busbar frame comprises:
a main body covering a longitudinal central region of the battery module;
at least one extension portion extending from the main body toward a longitudinal end of the battery module; and
an end portion provided at an end of the extension portion.

10. The battery module of claim 9, wherein a PCB is mounted on the main body, and a plurality of busbar plates and terminal busbars are electrically connected to the PCB.

11. The battery module of claim 9, wherein the terminal busbar comprises:
a terminal extension portion extending from the main body of the busbar frame along the extension portion; and
a terminal portion provided at an end of the terminal extension portion and exposed to the outside.

12. The battery module of claim 11, further comprising end plates coupled to the one side and opposite side of the lower frame in the longitudinal direction to cover both ends of the cell assembly,
wherein the terminal portion comprises a positive terminal portion and a negative terminal portion,
wherein the positive terminal portion and the negative terminal portion are mounted on the same end plate.

13. The battery module of claim 9, further comprising end plates coupled to the one side and opposite side of the lower frame in the longitudinal direction to cover both ends of the cell assembly,
wherein the end portion is configured to be coupled to the end plates.

14. The battery module of claim 13, wherein the end portion includes a coupling protrusion, each end plate includes a groove, and the coupling protrusion of the end portion is configured to be inserted into the groove provided in each end plate.

15. The battery module according to claim 3, further comprising an upper cover provided on the busbar frame assembly.

16. A battery pack comprising at least one battery module of any one of claims 3 to 15.

17. A vehicle comprising at least one battery pack of claim 16.
